Europäisches Patentamt

European Patent Office

Office européen des brevets

(11) Publication number: **0 264 862 B1**

## EUROPEAN PATENT SPECIFICATION

(45) Date of publication of patent specification: **18.03.92**  (51) Int. Cl.⁵: **H01M 10/12, H01M 2/24**

(21) Application number: **87115195.7**

(22) Date of filing: **16.10.87**

(54) **Plate assembly for a lead-acid battery.**

(30) Priority: **22.10.86 JP 251141/86**

(43) Date of publication of application:
**27.04.88 Bulletin  88/17**

(45) Publication of the grant of the patent:
**18.03.92 Bulletin  92/12**

(84) Designated Contracting States:
**DE FR GB**

(56) References cited:
**DE-A- 2 326 014**
**DE-C- 489 861**
**DE-C- 939 518**
**GB-A- 2 098 383**
**US-A- 3 518 127**

**PATENT ABSTRACTS OF JAPAN, vol. 5, no.
27 (E-46)[699], 18th February 1981; & JP-A-55
154 062 (MATSUSHITA DENKI SANGYO K.K.)
01-12-1980**

(73) Proprietor: **AISIN SEIKI KABUSHIKI KAISHA
2-1, Asahi-machi
Kariya-shi Aichi-ken(JP)**

(72) Inventor: **Yamada, Katsumi
16, Jyusanzuka Terazu-cho
Nishio City Aichi. Pref.(JP)**
Inventor: **Hara, Kouichiro
59, Sakurahonmachi Minami-ku
Nagoya City Aichi. Pref.(JP)**
Inventor: **Kamio, Takaki
42-5, Izumidamichi Hitotsugi-cho
Kariya City Aichi. Pref.(JP)**

(74) Representative: **Grams, Klaus Dieter, Dipl.-Ing.
et al
Patentanwaltsbüro Tiedtke-Bühling-Kinne-
Grupe-Pellmann-Grams-Struif Winter-Roth
Bavariaring 4
W-8000 München 2(DE)**

EP 0 264 862 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to plate assembly for lead-acid battery, and in particular, to plate assembly for lead-acid battery capable of improving charge and discharge characteristics.

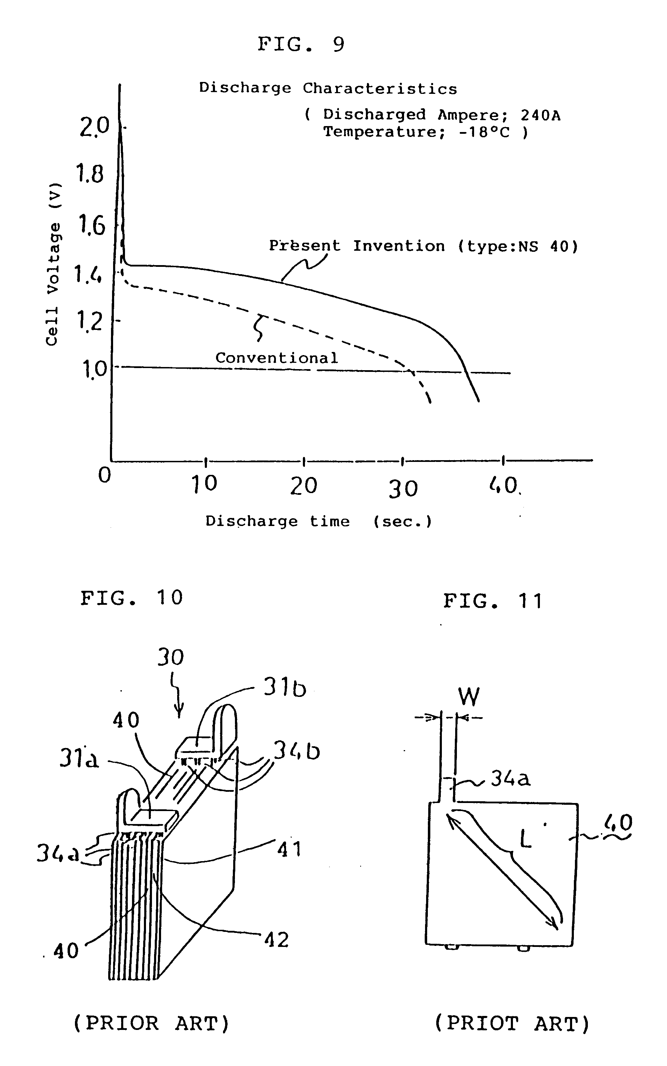

In a conventional lead-acid battery, it is customary to construct a plate assembly as shown in Fig. 9. That is, the plate assembly 30 is comprised of a plurality of positive electrode plates 40 and a plurality of negative electrode plates 41 which are alternately interspaced, and a plurality of separators 42 sandwiched in between each pair of the positive and negative electrode plates 40, 41.

All of these positive and negative electrode plates 40, 41 are in the shape of rectangle. Each of the positive electrode plates 40 is provided with a lug 34a on one side of the top edge thereof in crosswise direction and each of the negative electrode plates 41 a lug 34b on one side of the top edge thereof in such a manner that lugs 34a and 34b form two parallel rows separately on each side when the electrode plates are assembled.

These lugs 34a and 34b each have the same width of "W". Each of the lugs 34a of the positive electrode plates 40 is electrically connected with each other by means of a strap 31a and each of the lugs 34b of the negative electrode plates 41 by means of a strap 31b. Thus, an electrical current generated from the positive and negative electrode plates 40, 41 is collected by each of the lugs 34a and 34b. Then, the collected electrical current is discharged through straps 31a and 31b.

In the conventional lead-acid battery, however, the positive electrode plates 40 each have no more than one lug 34a and also negative electrode plates 41 each have only one lug 34b on either of the right and left sides of the top edge thereof in crosswise direction.

Consequently, as for an individual electrode plate, a distance "L" between the lug and the remotest point from the lug on that plate becomes considerably long as shown in Fig. 11. Theoretically, the value of internal resistance of the electrode plate depends on the distance "L" mentioned above. In fact, the longer the distance "L" is, the larger internal resistance becomes. Disadvantages of the conventional battery construction are that such electrode plates with a large internal resistance cause a large voltage drop when the battery is discharged. Especially, in a low temperature high discharge rate operation, an initial voltage of the battery is decreased remarkably, and eventually, in the known lead-acid battery, it is extremely difficult to attain high charge and discharge characteristics.

Furthermore in document DE-C-939 518 there has been disclosed a generic plate assembly for a lead-acid battery comprising negative plates provided with two outer lugs respectively, and positive plates provided with a central lug respectively. In this connection, the negative lugs of a cell as well as the positive lugs are connected with each other. In order to connect a plurality of cells in series, U-shaped straps are substantially necessary which connect the outer negative lugs of a cell with the central positive lugs of an adjacent cell.

It is the object of the present invention to provide a plate assembly of the above type for a lead-acid battery which permits to connect individual cells of the battery in series in as simple a manner as possible.

According to the present invention this object is accomplished by a plate assembly for a lead-acid battery comprises a plurality of positive and negative electrode plates which are alternately interspaced and each of which is provided with at least one lug on the top edge thereof as defined in claim 1, and a plurality of separators sandwiched in between each pair of positive and negative electrode plates.

This plate assembly is classified into two types different in construction and they are alternately disposed.

In one type of plate assembly, positive electrode plates each have a lug placed around the center of the top edge thereof, and negative electrode plates each have a lug provided on each side of the top edge thereof. Meanwhile, in the other type of plate assembly, positive electrode plates each have a lug on each side of the top edge thereof and negative electrode plates each have a lug around the center of the top edge thereof. That is, between these two different types of plate assemblies, construction of positive and negative electrode plates is just opposite to each other.

This particular battery construction is theoretically equal to the state where electrode plates are vertically divided into two parts. At this point, it is to be noted that electric charge generated from each of the electrode plates may be collected independently and separately by each of the lugs.

In the case of electrode plates each having two lugs, the distance from the lug located on one side to the bottom center (one half of the total width) of each plate is the longest one. This distance is much shorter thant he distance "L" in the conventional electrode plate construction, resulting in smaller internal resistance and eventually, improved charge and discharge characteristics.

In the case of electrode plates each having only one lug around the central portion of the top edge thereof, the distance from the central lug to each of the bottom corners (one half of the total width of the plate) is the longest one. This longest distance is almost equal to that of the electrode plate with two lugs, which means that it is much shorter than the distance "L" in the conventional plate construction. In this way, internal resistance of the plate becomes fairly smaller. In the case of the plate assemblies for lead-acid batteries according to the present invention, both of positive and negative electrodes have much smaller internal resistance than the conventional ones, irrespective of the type of plate assembly. As a result, voltage drop when the battery is discharged can be maintained small enough to improve discharge characteristics to a great extent.

It is preferred to make the width of each lug located on both sides of the top edge of the individual electrode plate to be equal, and also to make the width of each lug located around the center of the top edge of the plate to be twice as wide as that placed on both sides.

By this dimensional configuration, the width of the lugs provided on electrode plates, either positive or negative, becomes practically equal to each other regardless of their location.

This means that all of the electrode plates can have about the same internal resistance.

A more complete application of the invention any many of the attendant advantages thereof will be readily obtained as the same becomes better understood by reference to the following detailed description when considered in connection with the accompanying drawings wherein;

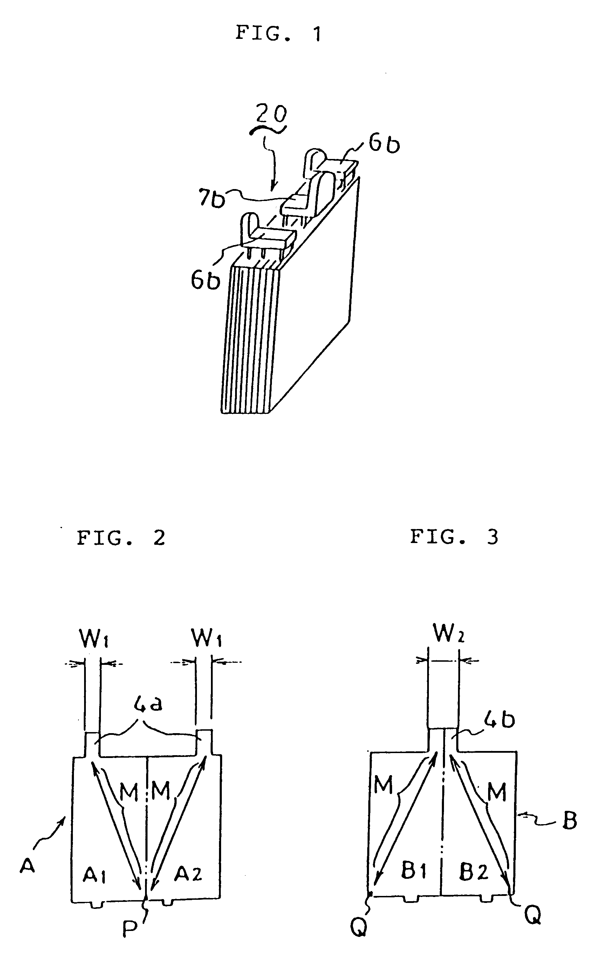

Fig. 1 is a perspective view illustrating an external appearance of a plate assembly of an embodiment according to the present invention.

Fig. 2 is an elevational view of an electrode plate of type A according to the present invention.

Fig. 3 is an elevational view of an electrode plate of type B according to the present invention.

Fig. 4 is a plan view of a lead-acid battery incorporating a plate assembly according to the present invention.

Fig. 5 is a partly enlarged view of the lead-acid battery shown in Fig. 4.

Fig. 6 is a cross view of a negative electrode plate of type B according to the present invention.

Fig. 7 is a perspective view illustrating an external appearance of a lug and a strap according to the present invention.

Fig. 8 is a cross view illustrating an intercell according to the present invention.

Fig. 9 is a graph illustrating for comparison charge and discharge characteristics between a lead-acid batter y in the present invention and a conventional one.

Fig. 10 is a perspective view of external appearance of a plate assembly comprising conventional electrode plates.

Fig. 11 is an elevational view of conventional electrode plates.

Plate assemblies for a lead-acid battery according to the present invention will be hereinafter explained with reference to preferred embodiments. A lead-acid battery 100 according to this preferred embodiment is primarily intended for using it as a car battery. As shown in Fig. 4, a battery container 9 is partitioned in six cells. Disposed in these cells are six plate assemblies 10, 20 which are alternately arranged and connected in series. Each plate assembly has an electromotive force of 2V, and consequently, a total output voltage becomes 12V (6x2V). Provided in one of the plate assemblies 10 on the extreme left side is a positive post 11 (to be associated with positive terminal), and provided in one of the plate assemblies 20 on the extreme right side is a negative post 12 (to be associated with negative terminal). There is contained dilute sulfulic acid (i.e., electrolyte) in each of the six cells.

The plate assemblies 10 each have such a construction as is slightly different from that of the plate assemblies 20. Namely, as shown in Fig. 4, each of the plate assemblies 10 is provided with a positive strap 6a around the center of the top edge in crosswise direction and negative straps 7a around both sides also in crosswise direction. Meanwhile, the plate assemblies 20 are provided with a pair of positive straps 6b around both sides and a negative strap 7b around the center of the top edge in crosswise direction. All of these straps 6a, 6b, 7a, 7b are made of conductive materials. The above differently constructed plate assemblies 10, 20 are alternately disposed, and each of negative straps 7a is electrically connected with positive strap 6b by means of inter-cell connecting portions 8b.

In the meantime, each of negative strap 7b, being located around the center of the plate assemblies 20 in crosswise direction, is electrically connected with the positive strap 6a by means of inter-cell connecting portion 8a. In this way, six plate assemblies 10, 20 are connected in series and sequentially. Each of the inter-cell connecting portions 8a, 8b is integrally joined to each other by means of welding.

At this point, reference is made to the detailed construction of plate assemblies 10, 20.

Each of the plate assemblies 10, as shown in Fig. 5 has a plurality of positive and negative electrode plates 2a, 1a which are alternately interspersed. Sandwiched in between each pair of electrode plates 2a, 1a is a separator 3.

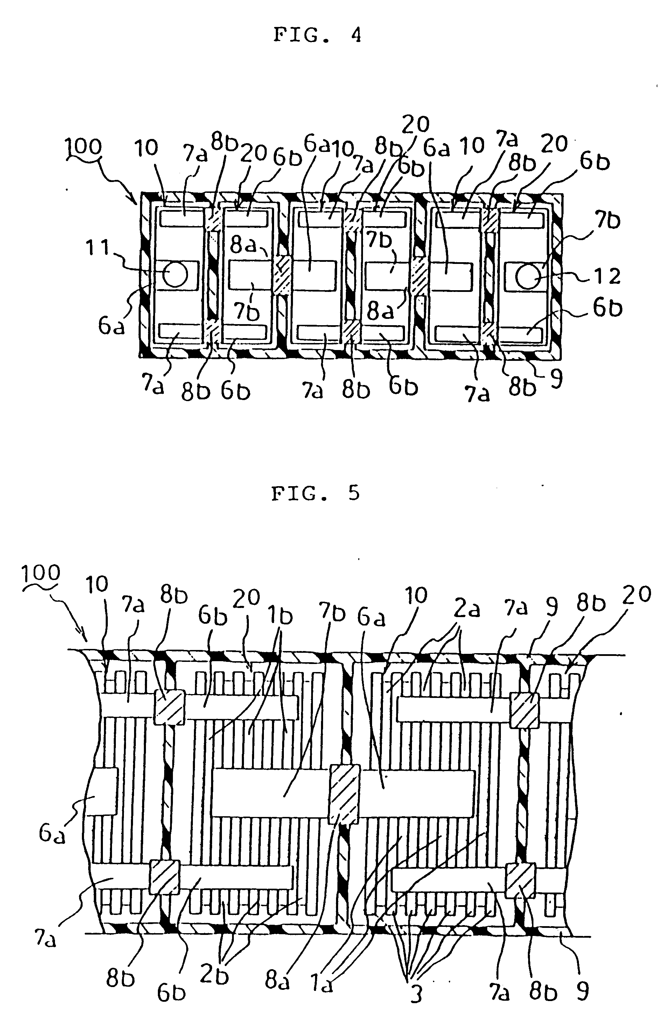

The negative electrode plates 1a, as shown in Fig. 3, are of the types B, while the positive electrode plates 2a, as shown in Fig. 2, are of the types A. The type A are in the shape of rectangular plates each of which has a pair of lugs 4a projected upwardly and disposed on both sides of the top edge thereof in crosswise direction.

Similarly, the types B are in the slape of rectangular plates each of which has a lug 4b around the center of the top thereof in crosswise direction. Each of the plate assemblies 20, as shown in Fig. 5, has a plurality of positive and negative electrode plates 2b, 1b which are alternately interspaced. Sandwiched in between each pair of electrode plates 2b, 1b is a separator 3.

The positive electrode plates 1b, as shown in Fig. 2, are of the types A, while the negative electrode plates 2b, as shown in Fig. 3, are of the types B. Accordingly, in the plate assemblies 10, to the negative straps 7a disposed on both sides of the top edge, lugs 4a of the plurality of negative electrode plates 1a are electrically connected in parallel. To the positive straps 6a placed around the center portion, lugs 4b in pairs of the plurality of positive electrode plates 1a are electrically connected in paralell (refer to Figs. 4 and 5).

The plate assemblies 20, as shown in Fig.5, each have a plurality of positive and negative electrode plates 2b, 1b interspaced alternately, and a plurality of separators 3 each sandwiched in between each pair of the electrode plates 2b, 1b.

As a consequence, in the case of plate assemblies 20, to the positive straps 6b disposed on both sides of the top edge, lugs 4a of the plurality of positive electrode plates 1b are electrically connected in parallel. Similarly, to the negative straps 7b placed around the center portion, lugs 4b of the plurality of negative electrode plates 2b are electrically connected in parallel.

With the construction mentioned above, electric charge generated from the electrode plates of the types A is divided in two and collected by each of the straps 6a through the respective lugs 4a. Namely, the electrode plates A come to the state substantially as if each of them were divided in two halves (a right half and a left half), being bounded around the central portion in crosswise direction (as illustrated in two dotted lines in Fig. 2).

Accordingly, in the case of types A plates, the longest position from the pair of lugs 4a is a point "P" which is located around the center of the bottom of the plate in crosswise direction. The distance "M" between each of the lugs 4a and the point "P" is shorter than the longest distance "L" in the conventional electrode plate (as shown in Fig. 11). This shortened distance contributes to reducing internal resistance remarkably.

The same thing can be said about the types B plates. In other words, in the case of types B plates, electric charge generated from each of the electrode plates B is collected by the lug 4b which is located around the center of the top of the plates B in crosswise direction. The electrode plates B become to an equivalent state where each of them is substantially divided in two halves B1, B2 (as shown in two dotted lines in Fig. 3).

The longest point from the lug 4b is a pair of points "Q" positioned on both sides of the bottom of the plate in crosswise direction. The distance "M" between them is also shorter than the longest distance "L" in the conventional electrode plate. Thus, the electrode plates B also have a smaller internal resistance. As shown in Figs. 2 and 3, partitioned halves A1 and A2 of the plates A are equal to halves B1 and B2 of plates B.

In addition, the distance "M" between the lug 4a and point P is also equal to that between the lug 4b and point Q. Accordingly, it can be safely said that the types A plates and the types B plates have approximately the same internal resistance, irrespective of their different external configuration.

At this point, it is to be noted that a pair of lugs 4a of the types A plates are constructed to have the same width of "W1". Also, the lug 4b of each of the types B plates has a width "W2" which is twice as large as the width "W1" of the lugs 4a. Furthermore, the width "W1" of the lugs 4a is equal to the width "W" of the lug 34a of conventional electrode plate 40. Thus, all the lugs 4a, 4b of the electrode plates A, B according to this preferred embodiment have been doubled in width as compared with the conventional lug 34a.

This much increase in width of the lugs serves to ensure to make internal resistance of electrode plates A, B as small as possible. The electrode plates A, B have grid portions disposed in a mesh-shaped pattern, to which the lugs 4a, 4b are electrically connected. Provided in the mesh-shaped portion is active material with positive or negative polarity.

Since, internal resistance of each of the electrode plates 1a, 1b, 2a, 2b is so small that internal resistance of plate assemblies 10, 20, and consequently, of the lead-acid battery 100 itself becomes very small. Thereby, an extent of voltage drop in discharging operation is decreased very much, and uniform reaction of t he electrode plates 1a, 1b, 2a, 2b with electrolyte is assured, thus causing prolonged lives of electrodes plates.

For the purpose of experiment, a pair of positive and negative electrodes are manufactured and disposed in the lead-acid battery 100 which containes dilute sulfuric acid as electrode plates according to the present invention becomes smaller by 30% than that of the conventional one as shown in the following table 1.

TABLE 1

| | internal resistance (1) | potential difference in electrode plate (2) | |
|---|---|---|---|
| | | positive | negative |
| Conventional | 1.73 | 0.48 | 0.48 |
| Present Invention | 1.48 | 0.33 | 0.34 |

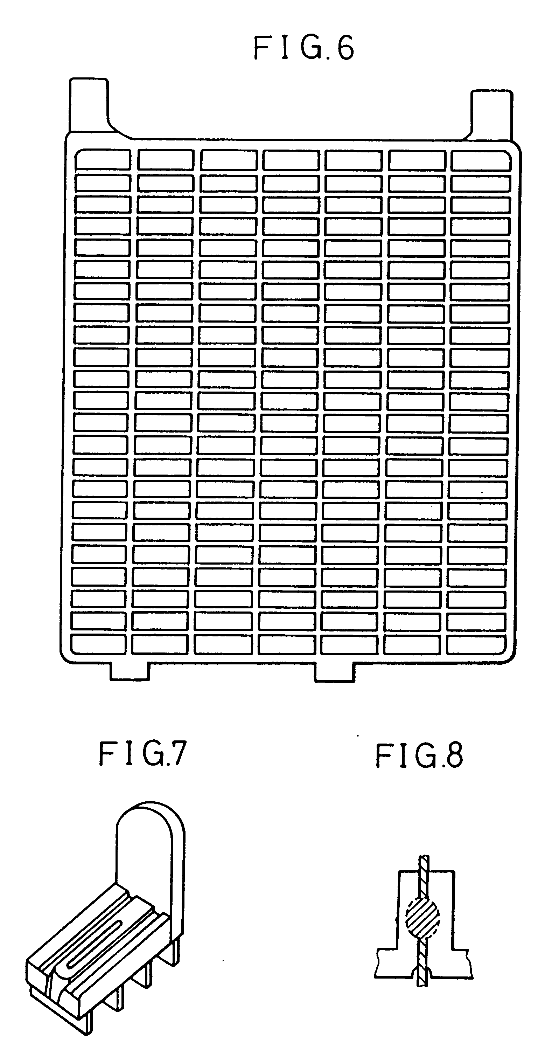

Note: In the above table 1,
(1) Dimensional specifications of all electrode plates used are equal. Internal resistance is represently as a ratio of total resistance which is constituted by electric resistance of electrolyte plus reduction resistance of electrolyte and electrode plates to all resistance among lugs of electrode plates. Tables 2 and 3 show specifications for electrode plate and lug respectively. In the case of table 2, measurement was made without grid portions. External appearance of electrode plate is shown in Fig. 6 and that of lug is shown in Fig. 7. Fig. 8 shows a cross view of intercell. As for electrode plate, it may have a meshed, obliquely lined, or grated pattern, and so forth. (2) There is shown a ratio of average potential between positive and negative electrodes plates to internal potential difference of each of these electrode plates.

TABLE 2

| | negative (polarity) | | |
|---|---|---|---|
| Alloy(%) | Sb‥3.09 | As‥0.26 | Pb‥the rest |
| Weight(g) | 32 | | |
| External Dimensions | | | |
| Width (mm) | 108 | | |
| Height (mm) | 126 | | |
| Thickness (mm) | 1 | | |
| Pitch of Grated Pattern | | | |
| Vertical (mm) | 5 | | |
| Horizontal (mm) | 14 | | |
| Pellet Area (mm²) | 4x13=52 | | |
| | 4.3x13.5=58 | | |

Note:

(1) The above measurement was conducted without grid portions.

TABLE 3

| | positive | negative |
|---|---|---|
| Lug Width (mm) | 9 | 9 |
| Thickness (mm) | 2 | 1 |
| Sectional Area (mm²) | 14 | 10 |

Fig. 9 shows difference in discharge characteristics between the battery according to the present invention and the conventional one.

Conditions; discharged ampere: 240A
temperature: -18°C

As apparent from the graph in Fig. 6 output voltage has increased about 0.1V as compared width conventional one [from approx. 1.35V (conventional) to approx. 1.45V (present invention)]. The time lapsed until the output voltage becomes less than 1V after starting discharge;

approx. 30 sec. (conventional)
approx. 35 sec. (present invention)

7

This data shows that the lead-acid battery according to the present invention has a larger life than the conventional one.

## Claims

1. A plate assembly (10, 20) for a lead-acid battery (100) comprising a plurality of positive and negative electrode plates (1a, 1b, 2a, 2b) which are alternately interspaced and disposed in a plurality of cells, which could be connected in series, wherein said electrode plates (1a, 1b, 2a, 2b) are alternately provided with one lug (4b) around the center of their top edge or with two lugs (4a) on both sides of their top edge, wherein the positive lugs are connected and equally the negative lugs, characterized in that of two adjacent cells one cell has negative electrode plates with one lug (4b) and positive electrode plates with two lugs (4a) and the other cell has positive electrode plates with one lug (4b) and negative electrode plates with two lugs (4a), so that the cells could be connected in series by connecting the lugs (4b) around the center by straps (6a, 7b).

2. A plate assembly (10, 20) according to claim 1, characterized in that said lugs (4a) formed on both sides of said top edge are approximately the same width, and said lug (4b) formed around the center of said top edge has a doubled width of said lugs (4a) formed on both sides of said top edge.

3. A plate assembly (10, 20) according to claim 1, characterized in that said plurality of positive and negative electrode plates (1a, 1b, 2a, 2b), and the plurality of isolation separators (3) form two different types of plate assemblies (10, 20), and one of said plate assemblies (10) is provided with positive straps (6a) around the center and negative straps (7a) around both sides of said top edge transversely to the planes of said elec trode plates (1a, 1b, 2a, 2b) while the other one of said plate assemblies (20) is provided with positive straps (6b) around both sides and negative straps (7b) around the center of said top edge transversely to the planes of said electrode plates (1a, 1b, 2a, 2b).

4. A plate assembly (10, 20) according to claim 3, characterized in that each of said straps (6a, 6b, 7a, 7b) is made of conductive materials.

5. A plate assembly (10, 20) according to claim 3, characterized in that said negative straps (7a, 7b) provided transversely to the planes of said electrode plates (1a, 1b, 2a, 2b) are electrically connected with said positive straps (6a, 6b) provided transversely to the planes of said electrode plates (1a, 1b, 2a, 2b), by means of intercell connecting portions (8a, 8b).

6. A plate assembly (10, 20) according to claim 5, characterized in that said inter-cell connecting portions (8a, 8b) are integrally coupled by welding.

## Revendications

1. Assemblage de plaques (10, 20) pour batterie plomb-acide (100) comprenant une pluralité de plaques d'électrodes positives et négatives (1a, 1b, 2a, 2b) qui sont intercalées de façon alternée et disposées dans une pluralité d'éléments, qui peuvent être connectés en série, dans lequel lesdites plaques d'électrodes (1a, 1b, 2a, 2b) sont alternativement munies d'un crochet (4b) au voisinage du centre de leur bord supérieur ou de deux crochets (4a) sur les deux côtés de leur bord supérieur, et dans lequel les crochets positifs sont connectés, comme les crochets négatifs, caractérisé en ce que deux éléments adjacents à un élément comportent des plaques d'électrodes négatives avec un crochet (4b) et des plaques d'électrodes négatives avec deux crochets (4a), de façon à ce que les éléments puissent être connectés en série par connexion des crochets (4b) autour du centre, par des cavaliers (6a, 7b).

2. Assemblage de plaques (10, 20) selon la revendication 1, caractérisé en ce que lesdits crochets (4a) formés sur les deux côtés dudit bord supérieur ont approximativement la même largeur, et en ce que ledit crochet (40) formé au voisinage du centre dudit bord supérieur a une largeur double de celle desdits crochets (4a) formés sur les deux côtés dudit bord supérieur.

3. Assemblage de plaques (10, 20) selon la revendication 1, caractérisé en ce que ladite pluralité de plaques d'électrodes (1a, 1b, 2a, 2b) et en ce que la pluralité de séparateurs d'isolation (3) forment deux types différents d'assemblages de plaques (10, 20), et en ce que l'un desdits assemblages de plaques (10) est muni de cavaliers positifs (6a) autour du centre et de cavaliers négatifs (7a) autour des deux côtés dudit bord supérieur, transversalement par rapport aux plans desdites plaques d'électrodes (1a, 1b, 2a, 2b), alors que l'autre desdits assemblages de plaques (20) est muni de cavaliers positifs (6b) autour des deux côtés et de cavaliers négatifs (7b) autour du centre dudit bord supérieur, transversalement par rapport aux plans desdites plaques d'électrodes (1a, 1b, 2a, 2b).

4. Assemblage de plaques (10, 20) selon la revendication 3, caractérisé en ce que chacun desdits cavaliers (6a, 6b, 7a, 7b) est constitué de matériaux conducteurs.

5. Assemblage de plaques (10, 20) selon la revendication 3, caractérisé en ce que lesdits cavaliers (7a, 7b) disposés transversalement par rapport aux plans desdites plaques d'électrodes (1a, 1b, 2a, 2b) sont électriquement connectés auxdits cavaliers positifs (6a, 6b) disposés transversalement par rapport aux plans desdites plaques d'électrodes (1a, 1b, 2a, 2b), par l'intermédiaire de parties de connexion inter-éléments (8a, 8b).

6. Assemblage de plaques (10, 20) selon la revendication 5, caractérisé en ce que lesdites parties de connexion inter-éléments (8a, 8b) sont reliées de façon solidaire par soudage.

**Patentansprüche**

1. Plattenbausatz (10, 20) für einen Blei-Akkumulator (100), der eine Mehrzahl von positiven sowie negativen Elektrodenplatten (1a, 1b, 2a, 2b) umfaßt, die mit Zwischenraum voneinander und in einer Mehrzahl von Zellen angeordnet sind, welche in Serie geschaltet werden können, wobei die genannten Elektrodenplatten (1a, 1b, 2a, 2b) abwechselnd mit einer Anschlußnase (4b) im Bereich der Mitte ihrer Oberkante oder mit zwei Anschlußnasen (4a) an beiden Seiten ihrer Oberkante versehen und die positiven Anschlußnasen sowie gleicherweise die negativen Anschlußnasen verbunden sind, dadurch gekennzeichnet, daß von zwei aneinandergrenzenden Zellen eine Zelle negative Elektrodenplatten mit einer Anschlußnase (4b) sowie positive Elektrodenplatten mit zwei Anschlußnasen (4a) besitzt und die andere Zelle positive Elektrodenplatten mit einer Anschlußnase (4b) sowie negative Elektrodenplatten mit zwei Anschlußnasen (4a) besitzt, so daß die Zellen durch Verbinden der Anschlußnasen (4b) im Bereich der Mitte mit Hilfe von Kopplungslaschen (6a, 7b) in Serie geschaltet werden können.

2. Plattenbausatz (10, 20) nach Anspruch 1, dadurch gekennzeichnet, daß die besagten, an beiden Seiten der erwähnten Oberkante ausgebildeten Anschlußnasen (4a) von annähernd derselben Breite sind und die besagte, im Bereich der Mitte der erwähnten Oberkante ausgebildete Anschlußnase (4b) eine doppelte Breite von den besagten, an beiden Seiten der erwähnten Oberkante ausgebildeten Anschlußnasen (4a) hat.

3. Plattenbausatz (10, 20) nach Anspruch 1, dadurch gekennzeichnet, daß die genannte Mehrzahl von positiven und negativen Elektrodenplatten (1a, 1b, 2a, 2b) sowie die Mehrzahl von Isoliertrennelementen (3) zwei verschiedenartige Typen von Plattenbausätzen (10, 20) bilden und einer dieser Plattenbausätze (10) mit positiven Kopplungslaschen (6a) im Bereich der Mitte sowie negativen Kopplungslaschen (7a) im Bereich der beiden Seiten der erwähnten Oberkante in Querrichtung zu den Ebenen der besagten Elektrodenplatten (1a, 1b, 2a, 2b) versehen ist, während der andere der genannten Plattenbausätze (20) mit positiven Kopplungslaschen (6b) im Bereich der beiden Seiten sowie negativen Kopplungslaschen (7b) im Berich der Mitte der erwähnten Oberkante in Querrichtung zu den Ebenen der besagten Elektrodenplatten (1a, 1b, 2a, 2b) versehen ist.

4. Plattenbausatz nach Anspruch 3, dadurch gekennzeichnet, daß jede der genannten Kopplungslaschen (6a, 6b, 7a, 7b) aus leitfähigem Material gefertigt ist.

5. Plattenbausatz nach Anspruch 3, dadurch gekennzeichnet, daß die genannten negativen Kopplungslaschen (7a, 7b), die quer zu den Ebenen der besagten Elektrodenplatten (1a, 1b, 2a, 2b) vorgesehen sind, mit den genannten positiven Kopplungslaschen (6a, 6b), die quer zu den Ebenen der besagten Elektrodenplatten (1a, 1b, 2a, 2b) vorgesehen sind, elektrisch mit Hilfe von Zellenbrückenteilen (8a, 8b) verbunden sind.

**6.** Plattenbausatz nach Anspruch 5, dadurch gekennzeichnet, daß die genannten Zellenbrückenteile (8a, 8b) durch Schweißen einstückig verbunden sind.

FIG. 1

FIG. 2

FIG. 3

FIG. 4

FIG. 5

# F I G. 6

# F I G. 7

# FIG. 8

## FIG. 9

Discharge Characteristics

( Discharged Ampere; 240A
Temperature; -18°C )

Present Invention (type:NS 40)

Conventional

## FIG. 10

(PRIOR ART)

## FIG. 11

(PRIOT ART)